# EUROPEAN PATENT APPLICATION

(11) **EP 2 953 003 A1**
(43) Date of publication of application: **09.12.2015**
(21) Application number: 13873644.2
(22) Date of filing: 16.08.2013
(51) Int. Cl.: G06F 1/32

(54) **TOUCH SCREEN TERMINAL AND WORKING METHOD THEREOF**

(30) Priority: 04.02.2013 CN 201310043658
(71) Applicant: ZTE Corporation, Shenzhen, Guangdong 518057 (CN)
(72) Inventor: WU, Hongchao, Shenzhen Guangdong 518057 (CN)
(74) Representative: Mozzi, Matteo
(86) International application number: PCT/CN2013/081647
(87) International publication number: WO 2014/117500

(57) **Abstract**

A touch screen terminal and a working method thereof are provided. The touch screen terminal includes a touch screen, a touch control component, and a display control component. The touch screen includes a touch component and a display component. The touch component is configured to generate a corresponding touch signal according to touch operation of a user. The touch control component is configured to detect whether the touch component generates a touch signal when the touch screen terminal is in a locked mode; when the touch signal is detected, judge whether the touch signal meets a first preset condition; and when the touch signal meets the first preset condition, start the display control component. The display control component is configured to control the display component to display a corresponding interface after the display control component is started. The touch screen terminal of the present invention can improve the user experience and reduce the power consumption of the terminal.

## Description

### Technical Field

The embodiments of the present invention relate to the field of communication terminals, in particular to a touch screen terminal and a working method thereof.

### Background

On portable smart devices like a mobile phone and a personal digital assistant (PDA), touch screens are more and more widely used as user input devices; although man-machine interaction brought by the touch screens is very friendly, a common phenomenon is that the touch screen cannot be wholly relied on in device operations, and must rely on matching usage of mechanical keys. For example, a mechanical key which is frequently used is an on-off key for unlocking a device and waking the device from a sleep state. At present, a touch screen terminal in the market is waked through a physical key, and then a user performs an unlock operation to the touch screen terminal on the touch screen so as to enable the terminal enter a standby state or another working state. Since the terminal is usually waked by using a physical key manner, it will cause the lifetime of a terminal to be decreased and user experience to be reduced. In addition, in the process of waking through a physical key manner in the prior art, a signal detected by the touch screen needs to be sent to a CPU in the device, and a corresponding image is sent to a display for displaying through CPU processing. In the process of waking terminal screen displaying, main components like CPU are all working and power consumption is rather large. Waking a terminal is a common operation; however, the power consumption caused by this frequent operation is a great loss to the valuable electric energy of a mobile terminal.

### Summary

The main technical problem to be solved by the embodiments of the present invention is to provide a touch screen terminal and a working method thereof, which can improve user experience and reduce the power loss of the terminal.

In order to solve the above-mentioned technical problem, the embodiments of the present invention provide a touch screen terminal, including: a touch screen, a touch control component and a display control component;
the touch screen includes a touch component and a display component;
the touch component is configured to generate a corresponding touch signal according to a touch operation of a user;
the touch control component is configured to detect whether the touch component generates a touch signal when the touch screen terminal is in a sleep state; when the touch signal is detected, judge whether the touch signal meets a first preset condition; and when the touch signal meets the first preset condition, then start the display control component; and
the display control component is configured to control the display component to display a corresponding interface after the display control component is started.

In the embodiments of the present invention, the interface displayed by the display component is an unlock interface; the touch control component is further configured to detect an unlock signal generated by the touch component in response to an unlock operation of the user, and transmit the detected unlock signal to the display control component; the display control component is further configured to judge whether the unlock signal meets a second preset condition, and when the unlock signal meets the second preset condition, then the unlock operation is performed so as to enable the touch screen terminal enter a preset working mode.

In the embodiments of the present invention, the display control component is configured to directly make the display component directly display a corresponding interface after the display control component is started.

In the embodiments of the present invention, the display control component is configured to receive a touch signal currently detected by the touch control component after being started, and judge whether the touch signal meets a third preset condition, and when the touch signal meets the third preset condition, then the display component is enabled to display a corresponding interface.

In the embodiments of the present invention, the touch screen terminal further includes a display storage component; the display storage component is configured to store a preset interface; the display control component is configured to read a corresponding interface from the display storage component when the received touch signal is determined to meet the third preset condition, and enabling the display component to display the interface.

In the embodiments of the present invention, the display control component is configured to perform an unlock operation when an unlock signal is determined to meet the second preset condition, and activate a CPU in a sleep state so as to enable the touch screen terminal enter a preset working mode.

In the embodiments of the present invention, the second preset condition set by the display control component is the same as the third preset condition.

Likewise, in order to solve the above-mentioned technical problem, the embodiments of the present invention further provide a working method of a touch screen terminal, including:
when the touch screen terminal is in a sleep state, the touch component is detected whether to generate a touch signal; when the touch signal is detected, then the touch signal is judged whether to meet a first preset condition; and when the touch signal meets the first preset condition, then a display component is controlled to display a corresponding interface.

In the embodiments of the present invention, when a displayed interface is an unlock interface, the method further includes:
an unlock signal generated by a touch component in response to an unlock operation of the user is detected; and
it is judged that whether the detected unlock signal meets a second preset condition, and when the unlock signal meets the second preset condition, then the unlock operation is performed so as to enable the touch screen terminal to enter a preset working mode.

In the embodiments of the present invention, the touch component is detected whether to generate a touch signal; when the touch signal is detected, then it is judged that whether the touch signal meets the first preset condition; and when the touch signal meets the first preset condition, then a display component is controlled to display a corresponding interface including:
it is detected that whether the touch screen generates the touch signal; when the touch signal is detected, then it is judged that whether the touch signal meets the first preset condition; and when the touch signal meets the first preset condition, then the display component is enabled to directly display a corresponding interface.

In the embodiments of the present invention, the touch component is detected whether to generate the touch signal; when the touch signal is detected, then it is judged that whether the touch signal meets the first preset condition; and when the touch signal meets the first preset condition, then the display component is controlled to display a corresponding interface including:
it is detected whether the touch component generates the touch signal, when the touch signal is detected, then it is judged that whether the touch signal meets the first preset condition, and when the touch signal meets the first preset condition, then a currently detected touch signal is received, and it is judged that whether the received touch signal meets the third preset condition and displays a corresponding interface, and when the received touch signal meets the third preset condition, then a display component is enabled to display a corresponding interface.

In the embodiments of the present invention, an unlock operation is performed to make the touch screen terminal enter a preset working mode includes:
an unlock operation is performed and a CPU is activated in a sleep state within the touch screen terminal so as to enable the touch screen terminal enter the preset working mode.

The beneficial effects of the embodiments of the present invention are:
A touch screen terminal and a working method thereof provided in the embodiments of the present invention can improve user experience and reduce the power loss of the terminal. The touch screen terminal includes: a touch screen, a touch control component and a display control component; the touch screen includes a touch component and a display component; the touch component is configured to generate a corresponding touch signal according to a touch operation of a user; the touch control component is configured to detect whether the touch component generates a touch signal when the touch screen terminal is in a sleep state; when the touch signal is detected, judge whether the touch signal meets a first preset condition; and when the touch signal meets the first preset condition, then start the display control component; the display control component is configured to control the display component to display a corresponding interface after the display control component is started; during the process of the terminal waking touch screen displaying, touch and display components run independently, and it does not need to wake displaying of the touch screen through the manner of a physical key, which completes waking the touch screen displaying by making various operations on the touch screen, increases the link of man-machine interaction, and improves the user experience; and the terminal waking the touch screen displaying is realized by starting the display control component instead of by waking a CPU, and the CPU keeps in a sleep state during the process of the touch screen terminal waking the screen displaying, which avoids the consumption of the whole machine caused by waking the CPU.

### Brief Description of the Drawings

Fig. 1 is a schematic structural diagram of a touch screen terminal of Embodiment 1 of the present invention;
Fig. 2 is another schematic structural diagram of a touch screen terminal of Embodiment 1 of the present invention;
Fig. 3 is a schematic structural diagram of a touch screen terminal of Embodiment 3 of the present invention;
Fig. 4 is a flowchart of a working method of a touch screen terminal of Embodiment 4 of the present invention; and
Fig. 5 is another flowchart of a working method of a touch screen terminal of Embodiment 4 of the present invention.

### Detailed Description of the Embodiments

The disclosure will be described in detail with reference to the accompanying drawings and specific embodiments hereinafter.

### Embodiment 1

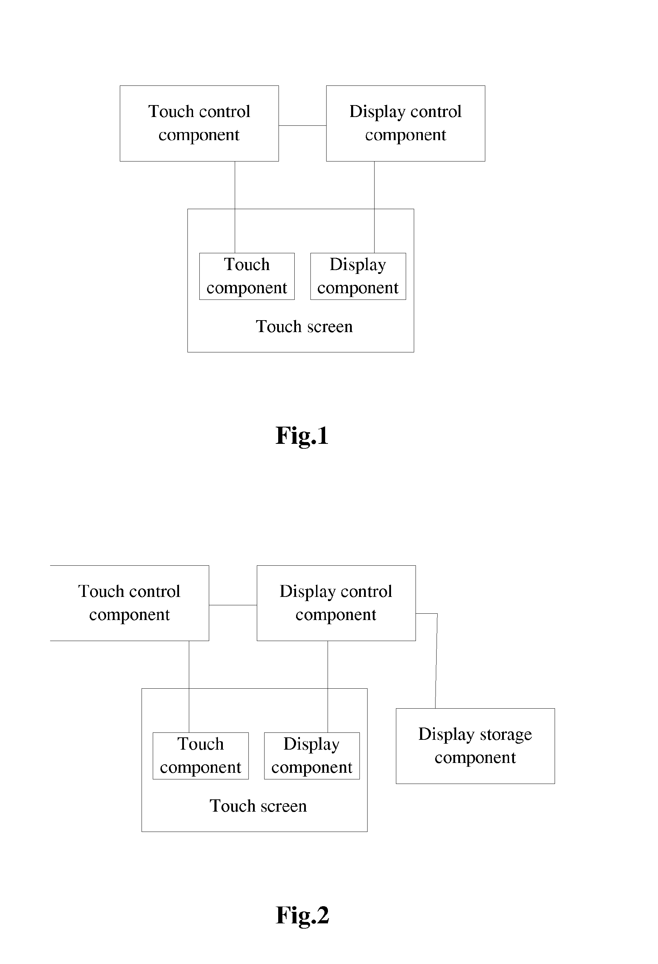

As shown in Fig. 1, a touch screen terminal of the present embodiment includes: a touch screen, a touch control component and a display control component;
the touch screen includes a touch component and a display component;
the touch component is configured to generate a corresponding touch signal according to a touch operation of a user;
the touch control component is configured to detect whether the touch component generates a touch signal when the touch screen terminal is in a sleep state; when the touch signal is detected, judge whether the touch signal meets a first preset condition; and when the touch signal meets the first preset condition, then start the display control component; and
the display control component is configured to control the display component to display a corresponding interface after the display control component is started.

The terminal in the present embodiment works in a sleep state, and a CPU and relevant components in the terminal are all in the sleep state, and a touch screen is not displaying in a closed state, which is similar to a terminal sleep state understood by a person skilled in the art.

A first preset condition in the present embodiment may be set earlier on a terminal by a user or set by a terminal manufacturer before leaving a factory; for example, a user may define a touch movement trajectory displayed by a touch screen in a certain application of the terminal; when the user operates on the touch screen, a touch control component in the terminal detects a touch signal corresponding to a movement trajectory of user fingers on the touch screen, then the touch signal is compared with a signal corresponding to a predefined touch movement trajectory, and when a difference value between a touch signal and a signal corresponding to the predefined touch movement trajectory is detected to be within a certain range, then a display control component is started, and the display control component controls the display component of the touch screen to display a corresponding interface.

Certainly, the preset condition in the present embodiment also may be an extreme condition; when a touch screen control component detects a touch signal, the display control component is started, and the display control component controls the display component of the touch screen to display a corresponding interface.

An interface displayed by the touch screen in the present embodiment may be a cartoon, video or picture, etc. which are preset by a user. For example, it may be a clock interface, which dynamically displays a current time, and also may be an unlock interface, which is used for unlocking the terminal by a user.

During the process of a touch screen terminal waking a terminal touch screen of the present embodiment, the touch component and the display component run independently, and the displaying of a display component waking the touch screen does not need to be implemented through the manner of a physical key, which completes waking the touch screen displaying by making various operations on the touch screen, increases the link of man-machine interaction, and improves the user experience; and the terminal waking the touch screen displaying is realized by starting the display control component instead of by waking a CPU, and the CPU keeps in a sleep state during the process of the touch screen terminal waking the screen displaying, which avoids the consumption of the whole machine caused by waking the CPU.

After the above-mentioned touch control component starts a display control component, the manner of the display control component controlling a touch screen to display an interface may include the following two types:
a first type is: according to a touch control component, triggering the display control component to start according to a currently detected touch signal, and after starting the display control component, directly controlling the display component of the touch screen to display an interface or after starting the display control component, controlling the touch screen to display an interface according to the touch signal;
a second type is: a touch control component triggering the display control component to start according to a currently detected touch signal, and then sending the next detected touch signals to the display control component, and the display control component controlling the display component of the touch screen to display an interface according to the next detected touch signals.

With regard to the above-mentioned first manner, the display control component in the present embodiment is configured to directly make the display component display a corresponding interface after the display control component is started.

With regard to the above-mentioned second manner, the display control component in the present embodiment is configured to receive a touch signal currently detected by the touch control component after being started, and judge whether the touch signal meets a third preset condition, and when the touch signal meets the third preset condition, then the display component is enabled to display a corresponding interface.

A third preset condition in the present embodiment may be set earlier on a terminal by a user or set by a terminal manufacturer before leaving a factory; for example, a user may define a touch movement trajectory displayed by a touch screen in a certain application of the terminal; when the user operates on the touch screen, a touch control component in the terminal detects a touch signal corresponding to a movement trajectory on the touch screen of user fingers, then the touch signal is compared with a signal corresponding to a predefined touch movement trajectory, and when a difference value of a touch signal and a signal corresponding to the predefined touch movement trajectory is detected to be within a certain range, then a display control component is started, and the display control component controls the display component of the touch screen to display a corresponding interface.

Certainly, a touch control component of the present embodiment also may detect a current touch signal, and then continue to detect the following touch signals; after detecting two types of signals, a display control component is started according to a following detected touch signal, and after starting the display control component, a touch signal detected earlier is sent to the display control component, and the display control component controls a touch screen to display a corresponding interface according to a touch signal which is detected earlier.

The touch control component in the present embodiment may be configured to judge whether a detected touch signal is in accordance with a first preset signal when detecting a touch signal, and if the detected touch signal is in accordance with the first preset signal, then the display control component is started. The display control component may directly enable a display component of a touch screen to display a corresponding interface or control the touch screen to display a corresponding interface according to the touch signal.

Or, the touch control component in the present embodiment may be configured to judge whether a currently detected touch signal is in accordance with the first preset signal when detecting a touch signal, and if the currently detected touch signal is in accordance with the first preset signal, then the display control component is started; after starting the display control component, the touch control component sends a currently detected touch signal to the display control component; and after the display control component is set to be started, a received touch signal is determined whether to be in accordance with the third preset signal, and if the received touch signal is in accordance with the third preset signal, then the display component of the touch screen is enabled to display a corresponding interface.

The above-mentioned first preset signal and third preset signal may be a type of characteristic signal predefined by a device or a user, and the type of characteristic signal may be a signal generated by simultaneous touch of two points or multiple points, and also may be a signal generated in a sliding direction or sliding displacement. It should be noted that a preset signal for starting a display includes but not limited to the words that precede.

By using the above-mentioned touch screen terminal, when fingers of a user moves on a touch screen, the touch screen will generate a touch signal, wherein the touch signal may be a continuous touch signal or a discrete touch signal; a touch control component in the terminal will firstly select a touch signal corresponding to detecting a current action of the user, and judge whether the touch signal is in accordance with a preset signal, and if the touch signal is in accordance with the preset signal, then a display control component is started (this indication of waking a display controller needs not to through device CPU processing and transferring, and now the CPU being still in a sleep state); during the process of executing determination, the touch control component also continues to detect a touch signal corresponding to following actions of the user at the same time; after starting the display control component, the touch control component transfers the following detected touch signals to the display control component; and the display control component controls a touch screen to display a corresponding interface according to a received touch signal.

As shown in Fig. 2, the touch screen terminal of the present embodiment also may include a display storage component; the display storage component is configured to store a preset interface, like storing a preset picture or video, and these pictures or videos may be common pictures or cartoons in response to touch point locations, and also may be other pictures, like a clock, etc. In a terminal including a display storage component, after the above-mentioned display control component is started, and when a received touch signal is determined to meet the third preset condition, a corresponding interface is read from the display control component, and the display component is enabled to display the interface.

### Embodiment 2:

The touch screen terminal of the present embodiment is based on Embodiment 1; after a display control component in the touch screen terminal of the present embodiment is started, an interface displayed by a display component controlling the touch screen is an unlock interface. The unlock interface may be a common picture or a cartoon in response to a touch point location.

The touch control component in the present embodiment is further configured to detect an unlock signal generated by the touch component in response to an unlock operation of the user, and transmit the detected unlock signal to the display control component; the display control component is further configured to judge whether the unlock signal meets a second preset condition, and when the unlock signal meets the second preset condition, then the unlock operation is performed so as to enable the touch screen terminal enter a preset working mode.

The second preset condition in the present embodiment may be a preset signal, wherein the preset signal may be a type of characteristic signal predefined by a device or a user, and the type of characteristic signal may be a signal generated by simultaneous touch of two points or multiple points, and also may be a signal generated in a sliding direction or sliding displacement. However, it is not limited to these, a preset signal of the present embodiment may be a signal corresponding to an unlock action which is known to a person skilled in the art.

When the user makes an action on the touch screen, a touch component of the touch screen begins to generate a corresponding touch signal according to an operation action of the user; a touch control component detects the touch signal, and determines whether a first preset condition is satisfied, and if the first preset condition is satisfied, then a display control component is started; after starting the display control component, a display component of the touch screen may be directly triggered to display a corresponding unlock interface; or after starting the displaying control component, a touch signal which is currently detected by the touch control component is received, and the touch signal is determined whether to satisfy a third preset condition, and the third preset condition is satisfied, then a display component is enabled to display a corresponding unlock interface for the user to performing unlocking; then after displaying an unlock interface, the user makes an unlock action on the touch screen, and the touch component detects a corresponding unlock signal and transmits same to the display control component; and the display control component determines whether the unlock signal satisfy the second preset condition, and if the unlock signal satisfies the second preset condition, then an unlock operation is performed so as to enable the terminal to enter a preset working mode.

A preset working component in the present embodiment may be set or defined earlier on a terminal by a user; for example, after successful unlocking, the terminal may be enabled to enter a user interface standby state, and also may directly start a certain application program.

The CPU in a touch screen terminal of the present embodiment keeps in a sleep state during the process of the touch screen terminal being in waking and displaying; and when a display control component determines that a received unlock signal satisfies a second preset condition, an unlock operation is performed, and the CPU in the sleep state is activated so as to enable the terminal to enter a preset working mode.

The second preset condition in the display control component of the present embodiment may be the same as the third preset condition.

### Embodiment 3:

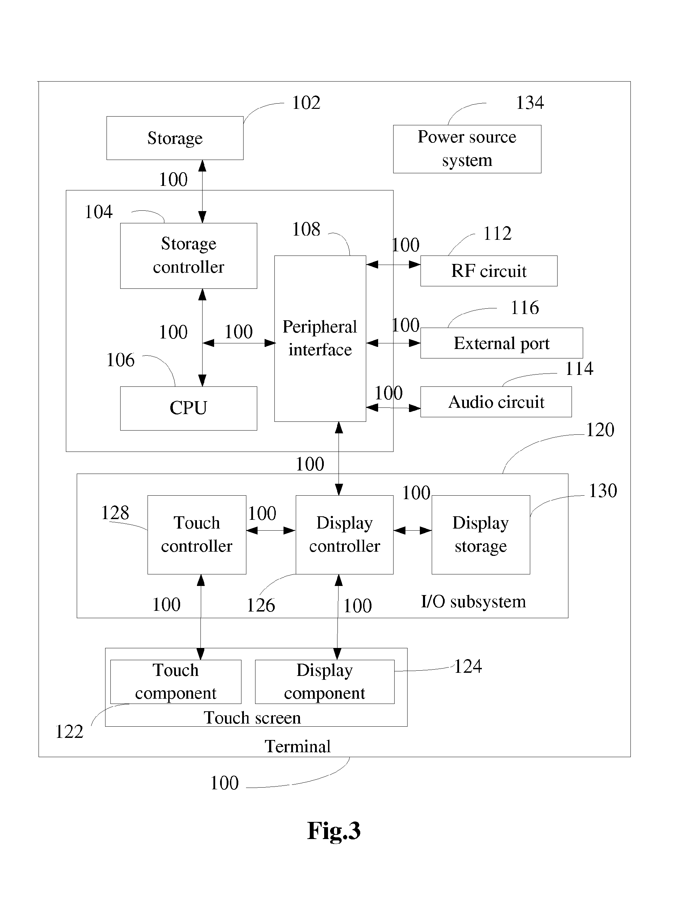

as shown in Fig. 3, a touch screen terminal 100 of the present embodiment includes a storage 102, a storage controller 104, one or more processing units (CPU) 106, a peripheral interface 108, a radio frequency (RF) circuit 112, an audio circuit 114, an external port 116, an input/output subsystem 120, a touch component 122, a touch screen controller 128, a display component 124, a display controller 126 and a display storage 130. These components communicate over one or more communication buses or signal lines 110. A terminal 100 may be any portable electronic device, which includes but not limited to a handheld computer, a mobile phone, a media player, a personal digital assistant (PDA), etc., and also includes the combination of two or more items therein. The component of the terminal 100 may have more or less components than as shown in figures, or have different component configuration. The various components shown in Figure 3 may be implemented in hardware, software, or a combination of both hardware and software, including one or more signal processing and application specific integrated circuits.

The storage 102 may include a random access storage and may also include one or more magnetic disk storage devices, flash memory devices, or other non-volatile solid-state storages. The storage controller 104 may control the access to the storage 102 by other components of the terminal 100, such as the CPU 106 and the peripheral interface 108.

The peripheral interface 108 couples input and output peripherals of the terminal to the CPU 106 and storage 102. The one or more processors 106 run various software applications stored in the storage 102 so as to execute various functions of the terminal 100 and process data.

The RF (radio frequency) circuit 112 receives and sends electromagnetic waves. The RF circuit 112 converts an electric signal into an electromagnetic wave, or converts the electromagnetic wave into the electric signal, and communicates with a communication network and other communication devices via the electromagnetic wave.

The audio circuit 114 provides an audio interface between a user and the terminal 100. The audio circuit 114 receives audio data from the peripheral interface 108, converts the audio data into an electric signal, and transmits the electric signal to a speaker. The speaker converts the electric signal into an audible wave which can be heard by human. The audio circuit 114 also receives an electric signal converted by a microphone from sound waves. The audio circuit 114 converts the electric signal into audio data, and transmits the audio data to the peripheral interface 108 so as to facilitate processing.

The I/O subsystem 120 provides an interface between an input/output peripheral of the terminal 100 and the peripheral interface 108, and input output peripherals are such as the touch component 122 and the display component 124. The I/O subsystem 120 includes the touch screen controller 128, a display controller 126 and the display storage 130.

The touch component 122 and the display component 124 respectively provide an input interface and an output interface between the device and the user. The display 124 displays visible output to a user, and the output may include a text, a pattern, a video and random combination thereof. The touch component 122 is a touch sensitive surface which accepts user input, which detects contact on the touch screen 122 together with the touch screen controller 128, and completes identification of a preset touch action, and outputs a corresponding action signal. The touch component 122 and touch screen controller 128 can use any of a plurality of touch control technologies to detect contact, and these touch control technologies include but not limited to capacitive, resistive, infrared, and acoustic surface wave technologies, as well as other proximity sensor arrays. The touch screen controller may communicate with the display controller via signal lines 110, and may directly transmit an identified touch action signal to the display controller, without performing middle transferring through the peripheral interface 108 of the terminal 100 and the CPU 106. The display storage 130 may preset a storage picture or video, may include a random access storage, and also may include one or more magnetic disk storage devices, flash memory devices, or other non-volatile solid-state storages; however, the display storage 130 is independent of a whole machine storage 102. A display controller may analyse a received touch signal, and directly read information within 130 according to an analysis result and display same in a display, without performing picture transferring through the peripheral interface 108 of the terminal 100 and the CPU 106.

The terminal 100 further includes a power source system 134 for supplying power to various components. The power source system 134 may include a power source management system, one or more power sources (for example, a battery, an alternating current (AC)), a charging system, a power source fault detection circuit, a power source converter and any other component associated with electric energy generation, management and distribution in a portable device.

During the process of using the touch screen to wake and unlock a terminal, a display component and a touch component in the touch screen independently work, and the touch screen terminal needs not to perform processing and signal transmission through a device CPU. The apparatus and method greatly reduce the consumption of electric energy of the whole machine when realizing good man-machine interaction experience of touch screen waking and unlocking a device.

### Embodiment 4:

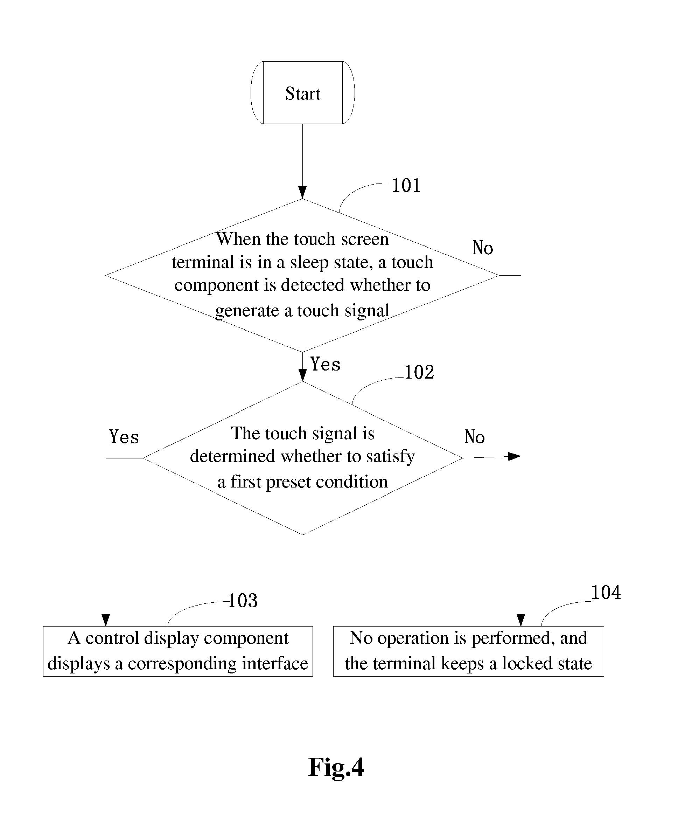

As shown in Fig. 4, the present embodiment provides a working method of a touch screen terminal, including:
step 101: when the touch screen terminal is in a sleep state, a touch component is detected whether to generate a touch signal, and if yes, then step 102 is executed, and if no, step 104 is executed;
step 102: the touch signal is determined whether to satisfy a first preset condition, and if satisfied, then step 103 is executed, and if no, step 104 is executed;
step 103: a control display component displays a corresponding interface;
step 104: no operation is performed, and the terminal keeps a sleep state.

When a touch signal is detected, it is judged that whether the touch signal satisfies a preset condition in the above-mentioned step 102 includes:
it is judged that whether the touch signal is in accordance with a first preset signal.

A detected touch signal may be a touch signal currently detected by a terminal. A characteristic signal predefined by a first preset signal device or a user, wherein the characteristic signal may be a signal generated by simultaneous touch of two points or multiple points, and also may be a signal generated in a sliding direction or sliding displacement, and in summary, it is a signal corresponding to a movement trajectory on a screen which is known to a person skilled in the art.

A control display component displaying a corresponding interface in the above-mentioned step 103 includes:
the display component is directly made to display a corresponding interface.

Or, the control display component displaying a corresponding interface in the above-mentioned step 103 may include:
a currently detected touch signal is received, and it is judged that whether a received touch signal satisfies a third preset condition and displays a corresponding interface, and if satisfies, then a display component is enabled to display a corresponding interface.

When the above-mentioned displayed interface is an unlock interface, the method of the present embodiment further includes:
an unlock signal generated by a touch component in response to an unlock operation of the user is detected;
and it is judged that whether a detected unlock signal meets the second preset condition, and if the signal meets the second preset condition, then the unlock operation is performed so as to enable the touch screen terminal to enter a preset working mode.

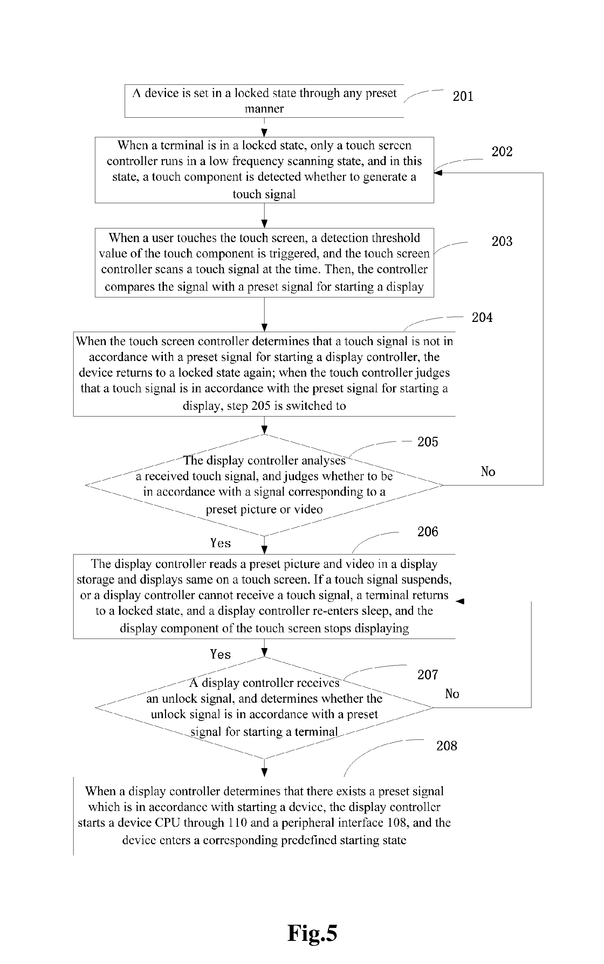

The following takes a touch screen terminal as shown in Fig. 3 as an example to describe the specific flow of a working method of a touch screen terminal of the present embodiment, and as shown in Fig. 5:
Step 201: firstly, a device is set in a locked state through any preset manner.

The locked state refers to a terminal being in a sleep state, which means all parts are in the sleep state except a touch screen controller, especially that a CPU is in an idle state and a display component is in a non-display state (without picture or video displaying, and a backlight lamp not lighting). At the moment, the power consumption of the terminal 100 is very low, and a current output by a power source system is in a minimum state.
Step 202: when a terminal is in a locked state, only a touch screen controller runs in a low frequency scanning state, and in this state, a touch component is detected whether to generate a touch signal.

The touch controller may drive the touch screen to continuously monitor whether there is signal triggering on the touch screen from the external.
Step 203: when a user touches the touch screen, a detection threshold value of the touch component is triggered, and a touch signal is scanned by the touch screen controller scans at the time. Then, the touch screen controller compares the signal with a preset signal for starting a display.

The preset signal for starting the display may be a type of characteristic signal predefined by a terminal or a user, and the type of characteristic signal may be a signal generated by simultaneous touch of two points or multiple points, and also may be a signal generated in a sliding direction or sliding displacement. It should be noted that the signal for starting the display controller includes but not limited to the words mentioned above, and the words mentioned above are merely for better understanding this method.
Step 204: when the touch screen controller determines that the touch signal is not in accordance with a preset signal for starting a display controller, the terminal returns to a locked state again; when the touch controller judges that a touch signal is in accordance with the preset signal for starting a display, step 205 is switched to.
Step 205: the touch screen controller sends a signal to start the display controller, and wakes the display controller from a sleep state, and after sending a starting signal, the touch screen controller continuously sends the detected touch signal to the display controller. If now the touch screen controller cannot detect a touch signal, the terminal returns to a locked state.

The waking indication needs no processing and transmitting through a CPU of the terminal, and now the CPU is still in a sleep state.
Step 206: the display controller analyses the received touch signal, and judges whether to be in accordance with a signal corresponding to a preset picture or video, and if yes, step 207 is executed; and if no, then step 202 is returned to;
Step 207: the display controller reads a preset picture and video in a display storage to display same on a touch screen. If the touch signal is suspended, or the display controller cannot receive the touch signal, the terminal returns to a locked state, and the display controller re-enters sleep, and the display component of the touch screen stops displaying.

These preset pictures or videos may be common pictures or cartoons, and also may be other pictures, such as a clock in response to touch point locations. It should be noted that these preset pictures or videos and signals corresponding to this include but not limited to the words that mentioned above, and the words mentioned above are merely for better understanding this method. In this process,
Step 208: the display controller receives an unlock signal, and determines whether the unlock signal is in accordance with a preset signal for starting a terminal, and if yes, then step 209 is executed, and if not, then step 207 is returned to;
   and the display controller determines whether to be in accordance with the preset signal for starting the signal by analysing a touch signal or picture (video) signal (an unlock signal). The touch signal is a signal received from the touch screen controller. A preset touch signal for starting the terminal, which is corresponding to a device may be the same as a preset touch signal for starting the display control component, and also may be not the same, but the reception time is later than that of the preset touch signal for starting the display, and the signal characteristic is similar to what is said in Step 203. A picture (video) signal is an information signal received from the display storage, and may be a preset picture (video) signal corresponding to starting a device may be a signal corresponding to a picture which is displayed lastly in a group of pictures, and also may be a signal which is sent when the video is played to the end. These picture (video) signals corresponding to starting a device include but not limited to the above-mentioned examples, and the words mentioned above are merely for better understanding this method.
Step 209: when the display controller determines that there exists a preset signal which is in accordance with starting a device, the display controller starts a CPU of the terminal through signal lines 110 and a peripheral interface 108, and the terminal enters a corresponding predefined starting state.

The predefined starting state herein may be that the device enters a user interface standby state, and also may directly start a certain application program. A corresponding preset signal for starting the device also may have multiple signal setting manners.

The above content are further elaboration of the present invention with reference to specific embodiments, and the specific embodiments of the present invention are not to be taken as limited to the description. To those skilled in the art to which the present invention belongs, there are many obvious equivalents or substitutions to the present invention that do not deviate from the concept of the present invention. Such obvious equivalents or substitutions shall be regarded to be within the protection scope of the present invention.

## Claims

1. A touch screen terminal, **characterized by** comprising: a touch screen, a touch control component and a display control component;
the touch screen comprises a touch component and a display component;
the touch component is configured to generate a corresponding touch signal according to a touch operation of a user;
the touch control component is configured to detect whether the touch component generates a touch signal when the touch screen terminal is in a sleep state; when the touch signal is detected, judge whether the touch signal meets a first preset condition; and when the touch signal meets the first preset condition, then start the display control component; and
the display control component is configured to control the display component to display a corresponding interface after the display control component is started.

2. The touch screen terminal according to claim 1, **characterized in that** the interface displayed by the display component is an unlock interface; the touch control component is further configured to detect an unlock signal generated by the touch component in response to an unlock operation of the user, and transmit the detected unlock signal to the display control component; the display control component is further configured to judge whether the unlock signal meets a second preset condition, and when the unlock signal meets the second preset condition, then the unlock operation is performed so as to enable the touch screen terminal enter a preset working mode.

3. The touch screen terminal according to claim 1 or 2, **characterized in that**
the display control component is configured to make the display component directly display a corresponding interface after the display control component is started.

4. The touch screen terminal according to claim 2, **characterized in that**
the display control component is configured to receive a touch signal currently detected by the touch control component after being started, and judge whether the touch signal meets a third preset condition, and when the touch signal meets the third preset condition, then the display component is enabled to display a corresponding interface.

5. The touch screen terminal according to claim 4, **characterized in that** a display storage component is further comprised; the display storage component is configured to store a preset interface; the display control component is configured to read a corresponding interface from the display storage component when the received touch signal is determined to meet the third preset condition, and enable the display component to display the interface.

6. the touch screen terminal according to claim 2, **characterized in that** the display control component is configured to perform an unlock operation when an unlock signal is determined to meet the second preset condition, and activate a CPU in a sleep state so as to enable the touch screen terminal enter a preset working mode.

7. The touch screen terminal according to claim 4, **characterized in that** the second preset condition set by the display control component is the same as the third preset condition.

8. A working method of a touch screen terminal, **characterized by** comprising:
when the touch screen terminal is in a sleep state, detecting whether the touch component generates a touch signal; when the touch signal is detected, then judging whether the touch signal meets a first preset condition; and when the touch signal meets the first preset condition, then controlling a display component to display a corresponding interface.

9. The working method of the touch screen terminal according to claim 8, **characterized in that** when the displayed interface is an unlock interface, the method further comprises:
detecting an unlock signal generated by a touch component in response to an unlock operation of the user; and
judging whether the detected unlock signal meets a second preset condition, and when the unlock signal meets the second preset condition, then performing the unlock operation so as to enable the touch screen terminal to enter a preset working mode.

10. The working method of the touch screen terminal according to claim 8 or 9, **characterized in that**
the step of detecting whether the touch component generates a touch signal; when the touch signal is detected, then judging whether the touch signal meets the first preset condition; and when the touch signal meets the first preset condition, then controlling a display component to display a corresponding interface comprises:
detecting whether the touch screen generates the touch signal; when the touch signal is detected, then judging whether the touch signal meets the first preset condition; and when the touch signal meets the first preset condition, then enabling the display component to directly display a corresponding interface.

11. The working method of the touch screen terminal according to claim 8 or 9, **characterized in that** the step of detecting whether the touch component generates the touch signal, and when the touch signal is detected, then judging whether the touch signal meets the first preset condition; and when the touch signal meets the first preset condition, then controlling the display component to display the corresponding interface comprising:
detecting whether the touch component generates the touch signal, when the touch signal is detected, then determining the touch signal meets the first preset condition, and when the touch signal meets the first preset condition, then receiving a currently detected touch signal, and judging whether the received touch signal meets the third preset condition and displays a corresponding interface, and when the received touch signal meets the third preset condition, then enabling a display component to display a corresponding interface.

12. The working method of a touch screen terminal according to claim 9, **characterized in that** the step of performing the unlock operation and enabling the touch screen terminal enter the preset working mode comprises:
performing an unlock operation and activating a CPU in a sleep state within the touch screen terminal so as to enable the touch screen terminal enter the preset working mode.
